# FASCICULE DE BREVET EUROPEEN

(11) **EP 3 027 499 B1**
(45) Date de publication et mention de la délivrance du brevet: **12.02.2020**
(21) Numéro de dépôt: 14745131.4
(22) Date de dépôt: 30.07.2014
(51) Int. Cl.: B63G 8/00, G01V 1/38, B63B 22/00

(54) **OBJET MARIN APTE À FLOTTER SUR L'EAU COMPRENANT UN DISPOSITIF D'ÉMISSION ET/OU DE RÉCEPTION D'ONDES ÉLECTROMAGNÉTIQUES DÉPLOYABLE**
ZUM SCHWIMMEN AUF WASSER FÄHIGES SEEOBJEKT MIT EINER EINSETZBAREN VORRICHTUNG ZUM SENDEN UND/ODER EMPFANGEN ELEKTROMAGNETISCHER WELLEN
MARINE OBJECT ABLE TO FLOAT ON WATER, COMPRISING A DEPLOYABLE DEVICE FOR EMITTING AND/OR RECEIVING ELECTROMAGNETIC WAVES

(30) Priorité: 02.08.2013 FR 1301861
(43) Date de publication de la demande: 08.06.2016
(73) Titulaire: Thales, 92400 Courbevoie (FR)
(72) Inventeur: PASCAL, Jean-Marcelin, 06901 Sophia Antipolis Cedex (FR)
(74) Mandataire: Derval, Estelle
(86) Numéro de dépôt international: PCT/EP2014/066383
(87) Numéro de publication internationale: WO 2015/018715

(56) Documents cités:
- DE-A1- 3 737 342
- US-A- 4 357 688
- US-A- 4 901 288
- US-A- 5 616 059
- US-A1- 2008 132 130
- US-B1- 6 269 763

## Description

Le domaine de l'invention est celui des dispositifs de communication installés sur des objets marins aptes à flotter à la surface de l'eau, notamment sur des engins sous-marins submersibles tels que des engins sous-marins autonomes aussi appelés AUV en référence à l'expression anglo-saxonne (« Autonomous Underwater Vehicle ») ou non-autonomes, aussi appelés UUV en référence à l'expression anglo-saxonne (« Unmanned Underwater Vehicle »). Des dispositifs de communication installés sur des objets marins sont aussi connus des documents US 4 901 288 A, US 4 357 688 A et US 6 269 763 B.

Lorsqu'un AUV ou un UUV part en mission, il effectue sa mission en profondeur et remonte à la surface afin d'être récupéré par un bâtiment de surface. Or, l'AUV ou l'UUV ne remonte pas toujours à la position à laquelle il devait théoriquement remonter. Des opérateurs situés à la surface de l'eau, ou à terre, ont besoin de connaitre la position de l'AUV ou UUV pour venir le récupérer. L'AUV ou UUV peut par ailleurs avoir besoin de connaitre sa position à un moment donné de sa mission, il fait alors surface avant de replonger. On parle d'auto-relocalisation. Ensuite, lors d'une mission, dans le cadre d'une « meute d'AUV ou d'UUV » ces derniers peuvent être amenés à échanger des données entre eux ou avec une autre plateforme, et faire ainsi surface pour cela.

Les AUV ou UUV sont donc classiquement équipés d'une antenne radioélectrique de réception de signaux satellites en vue directe avec des satellites et d'une antenne radioélectrique d'émission permettant de transmettre la position de l'engin à distance ou d'échanger des données avec l'extérieur. Ces antennes doivent être dégagées le plus possible au-dessus de la surface de l'eau pour permettre la réception des signaux émis par les satellites et la transmission d'ondes radioélectriques avec de bonnes performances.

Les antennes sont généralement installées sur un mât fixe s'étendant verticalement au-dessus de l'engin sous-marin. Cet agencement présente l'avantage d'être insensible à l'état de la mer, par rapport à un agencement dit flush dans lequel les antennes affleurent la surface du corps de l'AUV ou de l'UUV. Les antennes flush sont recouvertes d'une fine couche d'eau salée qui masque les antennes ce qui détériore les performances de l'antenne par fort état de mer. Les antennes flush ne sont plus performantes au-delà d'un état de mer 2. L'agencement sur mât fixe présente en revanche l'inconvénient d'affecter le profil hydrodynamique de l'engin et sa navigation.

Une solution pour pallier ces inconvénients est d'installer les antennes sur un mât déployable qui est escamoté, c'est-à-dire rentré au sein du corps de l'engin lors de sa navigation et qui est sorti à l'extérieur du corps pour les besoins de communication, lorsque l'engin remonte à la surface. On parle alors d'antennes déployables. Il existe différents types d'antennes déployables. Dans un premier type, les antennes sont déployées par translation du mât selon une direction radiale définie par rapport à l'axe longitudinal de l'AUV. On parle de mât hissable. Le mât en position escamotée s'étend alors le long d'un diamètre de l'engin. Cette première solution affecte considérablement la logeabilité au sein de l'AUV ce qui réduit de manière significative sa charge utile. Dans une deuxième solution, le mât est déployé par rotation autour d'un axe horizontal perpendiculaire à l'axe longitudinal de l'engin sous-marin. Dans sa position escamotée, le mât s'étend parallèlement à l'axe longitudinal de l'AUV et, dans sa position déployée, selon un axe vertical. L'inconvénient de cette solution est d'affecter l'élancement de l'AUV. Plus les équipements de communication doivent être dégagés au dessus de la surface de l'eau, plus le mât doit être long et la longueur de l'AUV augmentée d'autant. Autrement dit, les performances des antennes sont très dépendantes de la longueur du tronçon de l'engin sous-marin qui leur est consacré et sur lequel peut s'étendre le mât.

Le but de l'invention est de pallier tout ou partie ces inconvénients précités.

A cet effet, l'invention se rapporte à un objet marin selon la revendication 1 et apte à flotter à la surface de l'eau comprenant un corps délimité au moins partiellement par une surface courbe comprenant un logement débouchant sur ladite surface courbe. L'objet marin comprend un dispositif d'émission/réception déployable comprenant un bras sur lequel sont montés des moyens d'émission et/ou de réception d'ondes électromagnétiques, ledit bras étant relié audit corps au moyen d'une articulation à un degré de liberté en rotation autour d'un axe de rotation, l'articulation permettant au bras de pivoter de manière réversible entre une position escamotée, dans laquelle le bras est logé dans le logement et affleure la surface courbe et une position déployée dans laquelle le bras s'étend à l'extérieur dudit logement, le bras comprenant une première surface appelée surface extérieure, la surface extérieure est courbée selon la longueur du bras. La surface extérieure affleure ladite surface courbe et suit la courbe de ladite surface courbe lorsque le bras se trouve dans sa position escamotée. Le corps présente localement autour du bras une forme de cylindre, l'axe de rotation étant parallèle à l'axe longitudinal du cylindre. Le dispositif d'émission/réception déployable est rigide.

Avantageusement, le bras est courbé, la courbure du bras suivant la courbure de ladite surface extérieure.

Avantageusement, ledit bras s'étend perpendiculairement audit axe de rotation.

Avantageusement, ledit objet marin est équilibré de façon qu'un plan de flottaison lié au corps se stabilise parallèlement à la surface de l'eau lorsque ledit objet marin flotte par état de mer calme, l'axe de rotation étant parallèle au plan de flottaison, le bras s'étendant depuis une première extrémité jusqu'à une deuxième extrémité plus éloignée de l'articulation que la première extrémité, ledit bras comprenant un premier pôle correspondant à la zone du bras se trouvant à l'altitude maximale au-dessus du plan de flottaison lorsque le bras se trouve dans la position déployée, le premier pôle étant situé au voisinage de la deuxième extrémité.

Avantageusement, la position déployée est définie de façon que lorsque le bras occupe la position déployée, un axe, appelé axe vertical, passant par le premier pôle et l'articulation, est perpendiculaire au plan de flottaison par état de mer calme.

Avantageusement, le bras comprend un deuxième pôle correspondant à la zone du bras située à l'altitude maximale lorsque le bras est dans la position escamotée, le deuxième pôle se trouvant sur l'axe vertical.

Avantageusement, l'objet marin comprend une section comprenant le bras, la section étant réalisée dans un plan perpendiculaire à l'axe de rotation lorsque le bras est en position escamotée, la section étant délimitée par une courbe fermée, ladite courbe fermée ayant un périmètre, la portion du périmètre sur laquelle s'étend le bras entre l'articulation et le premier pôle est définie, pour une position donnée de l'articulation, par rapport au corps, et pour un angle prédéterminé formé entre l'axe de rotation et le plan de flottaison, comme étant la portion minimale du périmètre telle que lorsque le bras se trouve dans la position déployée, la distance séparant le premier pôle de l'articulation selon l'axe vertical est la distance maximale pouvant être obtenue pour ladite section.

Avantageusement, la courbe est un cercle, dans lequel ladite portion de la circonférence est égale à la moitié de la circonférence du cercle.

Avantageusement, la longueur du bras est supérieure à la moitié de la circonférence du cercle, le bras pivotant d'un angle sensiblement égal à 180° entre la position déployée et la position escamotée.

Avantageusement, le premier pôle est situé sur la surface extérieure, dans lequel la surface extérieure est convexe au moins dans une zone englobant le premier pôle.

Avantageusement, le bras comprend un mât reliant une tête à l'articulation, la tête comprenant le premier pôle et délimitant un logement dans lequel sont logés les moyens d'émission et/ou de réception.

Avantageusement, la tête comprend un support sur lequel sont montés les moyens d'émission et/ou de réception, le support s'étendant sensiblement parallèlement au plan de flottaison, par état de mer calme, lorsque le bras se trouve dans la position déployée.

Avantageusement, la tête est plus large que le mât selon un axe perpendiculaire au plan dans lequel s'étend le bras dans le sens de sa longueur.

Avantageusement, le cylindre est un cylindre de révolution.

Avantageusement, le corps est le corps d'un engin sous-marin.

Avantageusement, l'objet est localement à flottabilité neutre, dans une zone comprenant le bras.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement en vue de côté un exemple d'objet selon l'invention du type engin sous-marin muni d'un dispositif d'émission/ réception déployable,
- les figures 2a et 2b représentent schématiquement en perspective un tronçon de l'objet de la figure 1 dans lequel le dispositif d'émission/réception est escamoté et respectivement déployé,
- les figures 3a et 3b représentent schématiquement l'objet de la figure 1 en coupe selon un axe perpendiculaire à l'axe longitudinal de l'engin sous-marin dans lequel le dispositif d'émission/réception est escamoté et respectivement déployé,
- la figure 4 représente schématiquement une section d'un autre exemple d'objet selon l'invention dans lequel le dispositif d'émission/réception est escamoté.

D'une figure à l'autre, les mêmes éléments sont repérés par les mêmes références.

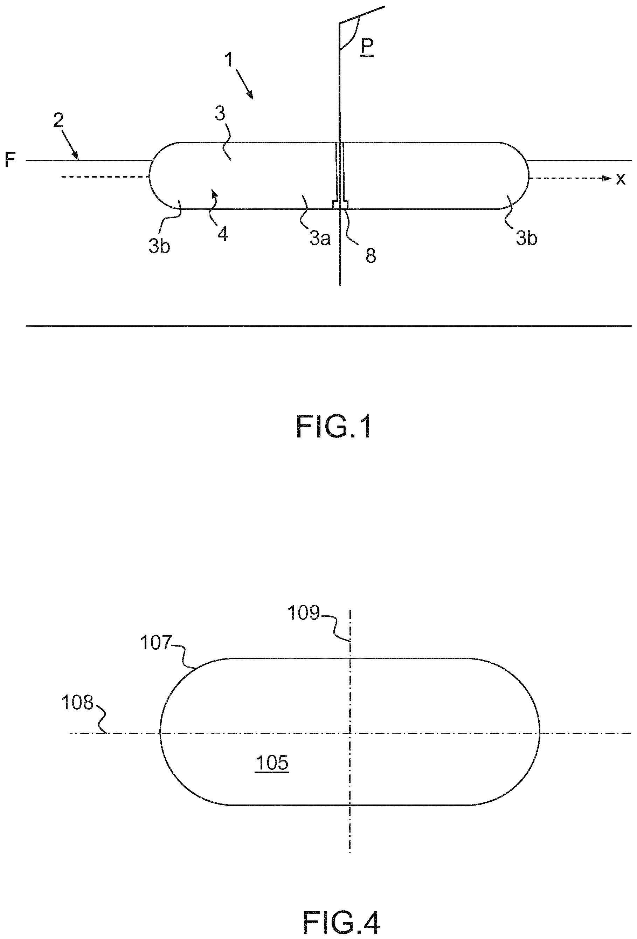

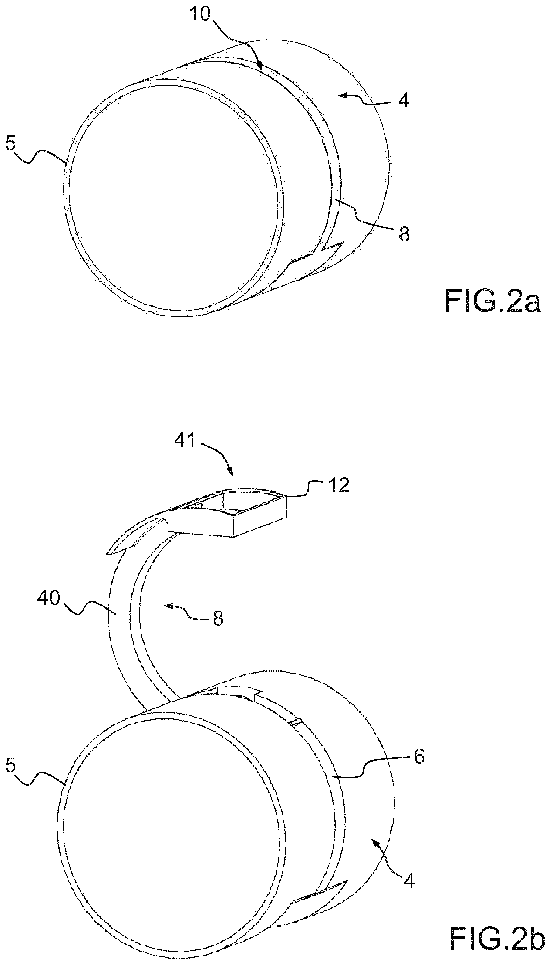

L'invention se rapporte à un objet marin 1 apte à flotter à la surface de l'eau 2 visible sur la figure 1. L'objet marin 1 comprend un corps 3 qui est, par exemple, le corps d'un engin sous-marin comme représenté sur l'exemple des figures 1 à 3b. Un engin sous-marin est un engin submersible. L'engin sous-marin peut être un engin sous-marin autonome, ou pas, autopropulsé, remorqué, ou dérivant. Le corps est délimité au moins partiellement par une surface courbe 4 qui est ici la surface extérieure de la coque 5 de l'engin sous-marin. La coque 5 de l'engin sous-marin est référencée sur les figures 2a et 2b. La surface courbe 4 est donc la surface du corps de l'engin sous-marin orientée vers l'extérieur de l'engin sous-marin, c'est-à-dire vers l'extérieur du corps 3 de l'engin sous-marin ou une portion de la surface du corps du sous-marin. Le corps 3 de l'engin sous-marin comprend une partie centrale 3a présentant une forme générale de cylindre et des extrémités 3b présentant classiquement mais de manière non limitative des formes générales de demi-sphères. Par surface courbe, on entend dans la présente description, une surface dont la direction varie sans former d'angle. Par angle, on entend la figure formée par l'intersection de plusieurs plans. Autrement dit, la surface courbe ne comprend pas d'angle saillant ou rentrant, c'est-à-dire qu'elle est dépourvue de points anguleux. On dit aussi que la surface est une surface galbée ou incurvée. En d'autres termes, en faisant une section de la surface courbe dans n'importe quel plan, on obtient au moins une courbe dans le plan. La courbe ne comprend jamais plus d'une tangente en un même point. Autrement dit, sa dérivée est continue.

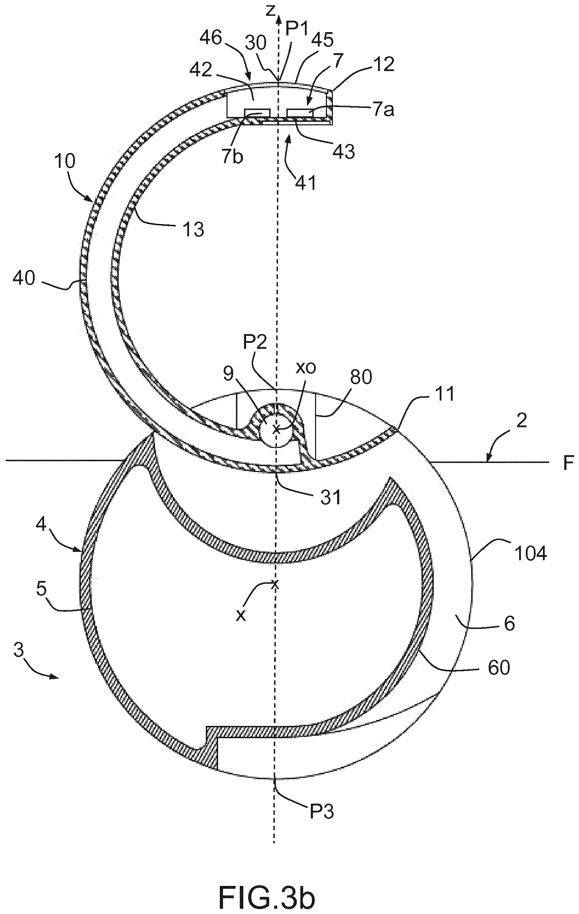

Sur les figures 2a et 2b, on a représenté schématiquement en perspective un tronçon de l'objet marin 1 au niveau de la partie centrale du corps de l'engin sous-marin dans deux situations. Un logement 6 visible sur la figure 2b est ménagé dans le corps 3. Ce logement 6 débouche sur la surface courbe 4. Ce logement 6 présente une forme de tranchée ou de canal s'étendant le long de la surface courbe 4. Une ouverture 104, visible sur la figure 3b, est ménagée dans la surface courbe 4 de façon que le logement débouche sur la dite surface courbe sur toute sa longueur.

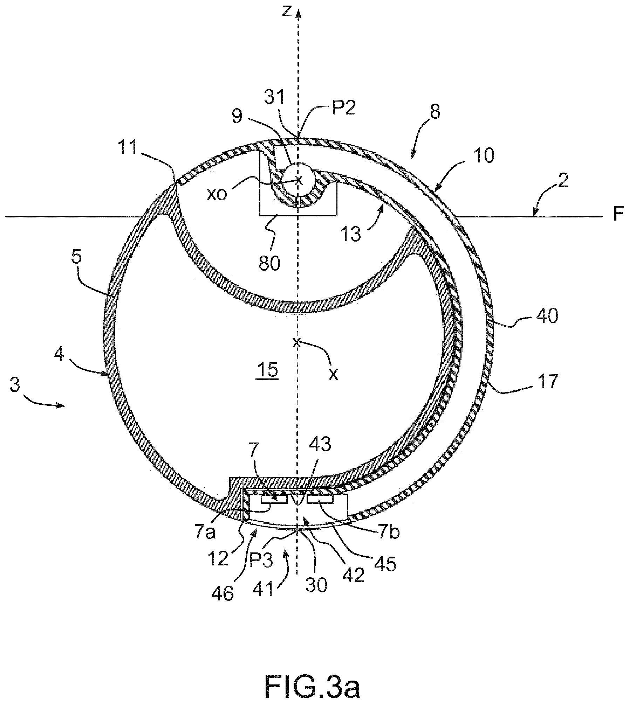

L'engin sous-marin est muni d'un dispositif d'émission et/ou de réception d'ondes électromagnétiques. Ce dispositif comprend des moyens d'émission et/ou de réception d'ondes électromagnétiques 7, représentés sur les figures 3a et 3b, comprenant au moins un émetteur et/ou au moins un récepteur d'ondes électromagnétiques. Sur la réalisation des figures, les moyens d'émission 7 comprennent un émetteur 7a et un récepteur 7b. Ces moyens 7 peuvent comprendre des émetteurs/ récepteurs de communication sans-fil permettant à l'engin de communiquer avec l'extérieur par une liaison sans fil lorsqu'ils se trouvent au-dessus de la surface de l'eau. Les moyens de communication comprennent, par exemple, une ou plusieurs antennes de réception de signaux émis par des satellites de type GPS. Ces antennes peuvent être associées à un récepteur de positionnement par satellite ou récepteur GNSS (en référence à l'expression anglo-saxonne Global Navigation Satellite Systems) permettant à l'engin sous-marin 1 de se localiser. Ils comprennent, par exemple, une ou plusieurs antennes d'émission d'ondes radioélectriques permettant par exemple de transmettre la position de l'AUV ou de l'UUV à distance. Des exemples d'antennes émettrices sont les antennes de téléphonie satellitaire de type Iridium et les antennes de communication radioélectriques émettant dans des bandes très hautes fréquence ou ultra hautes fréquences. Ils peuvent également comprendre une source lumineuse, par exemple, du type feux à éclats permettant à un opérateur de localiser l'AUV la nuit en phase d'approche. On peut par exemple utiliser une lampe au Xénon ou des LEDs (de l'anglais light-emitting diodes). Pour une bonne transmission de signaux visuels tout en limitant la diffusion des signaux visuels, la source lumineuse doit être positionnée le plus loin possible de la surface de l'eau au-dessus de cette surface. On peut aussi prévoir une caméra (récepteur de signaux visuels) permettant, par exemple de filmer les abords d'une côte hostile. Il est également possible de prévoir des antennes de communication faible portée, par exemple, du type Wi-Fi ou Bluetooth permettant, par exemple, à l'engin faisant surface de communiquer (échange, transmission de données acquises) avec un autre équipement du même type, notion de « meute » d'AUV ou différent, station de pilotage, unité de surface de gestion de la mission, etc... De manière générale, dans un souci de performances, on cherche à agencer ces émetteurs/récepteurs de façon à pouvoir les amener le plus haut possible au-dessus de la surface de l'eau lorsque l'objet 1 flotte à la surface de l'eau.

Les caractéristiques du dispositif d'émission et de réception sont définies de façon paramétrique par rapport à une surface courbe 4 de forme et de dimensions prédéterminées et pour un équilibrage particulier de l'objet 1. Le dispositif d'émission/réception déployable est rigide. Autrement dit, le dispositif d'émission/réception déployable ne se déforme pas entre sa position escamotée et sa position déployée.

Les émetteurs/récepteurs 7 sont montés sur un bras 8 s'étendant perpendiculairement à l'axe de rotation xo. Le bras 8 est mobile entre une position escamotée représentée sur les figures 2a et 3a et une position déployée représentée sur les figures 2b et 3b. Les figures 3a et 3b, représentent une coupe de l'objet marin 1 selon le plan P perpendiculaire à l'axe de rotation xo, lorsque le bras est dans sa position escamotée (figure 3a) et dans sa position déployée (figure 3b). Le bras 8 est relié au corps 3 au moyen d'une articulation 9 à un degré de liberté en rotation autour d'un axe de rotation xo, permettant au bras 8 de pivoter de manière réversible entre la position escamotée, représentée sur les figures 2a et 3a, dans laquelle le bras 8 est logé dans le logement 6 et affleure la surface courbe 4 et une position déployée, représentée sur les figures 2b et 3b, dans laquelle le bras 8 s'étend à l'extérieur dudit corps 3. Le bras 8 est mis en rotation autour de l'axe de rotation xo au moyen d'un actionneur rotatif 80 logé dans la section courante du corps 3. La réversibilité se fait par rotation autour de l'axe de rotation de l'articulation.

L'axe de rotation xo est perpendiculaire au plan des figures 3a et 3b et passe par la croix représentée sur chacune de ces figures. Sur la réalisation des figures, l'axe de rotation xo est parallèle à l'axe principal x de l'engin sous marin mais il pourrait former un angle non nul avec ce dernier axe x. Le bras 8 passe par l'ouverture 104, référencée sur la figure 3b, pour passer de la position déployée à la position escamotée et inversement. Dans sa position escamotée, le bras 8 ferme sensiblement l'ouverture 104. Autrement dit, le bras 8 ferme sensiblement l'ouverture au jeu de fonctionnement près.

Les positions du bras 8 sont aussi visibles sur les figures 2a et 2b dans lesquelles le bras 8 se trouve en position escamotée et respectivement déployée.

Le bras 8 s'étend entre une première extrémité 11 et une deuxième extrémité 12. La première extrémité 11 est plus proche de l'articulation que la tête 12. Le bras 8 comprend une première surface 10, appelée surface extérieure 10. La surface extérieure 10 est orientée vers l'extérieur du corps 3 lorsque le bras 8 est dans la position escamotée. Elle affleure alors la surface courbe 4. Autrement dit, elle présente une forme destinée à être dans la continuité de la courbe de la surface courbe 4 lorsque le bras 8 est dans la position escamotée. La surface extérieure 10 est une surface courbe qui est courbée dans le sens de la longueur du bras 8. Autrement dit, le changement de direction se fait sur la longueur du bras depuis la première extrémité 11 vers la deuxième extrémité 12.

L'invention présente l'avantage de profiter de la courbure de la surface 4 pour loger le bras 8 qui va permettre de dégager les émetteurs/récepteurs au dessus de la surface de l'eau. La solution proposée permet de limiter l'encombrement sur le corps le long de l'axe x. Elle présente en outre les avantages d'être autant efficace qu'une solution à mât fixe de même hauteur utile (hauteur de la tête de mât par rapport à la surface de l'eau) quel que soit l'état de la mer et de ne pas affecter le profil hydrodynamique (ou aérodynamique) de l'engin sous-marin lorsque le bras est en position escamotée. L'impact sur la traînée de l'engin sous-marin est quasi nul, le bras, une fois replié s'intègre parfaitement dans l'épure cylindrique du corps de l'engin sous-marin. Ceci est un point majeur, car l'endurance est un des enjeux de tout engin sous-marin en général, et des drones en particulier. Enfin, l'encombrement de la solution dans le volume intérieur de l'engin est particulièrement réduit en comparaison avec les solutions à mât hissable. Ainsi, la logeabilité interne de l'engin est sauvegardée, ce qui est un élément crucial pour la facilité d'intégration du système à bord des véhicules sous-marin.

Avantageusement, comme représenté sur les figures 3a et 3b, le bras 8 est courbé dans le sens de sa longueur et sa courbure suit la courbure de la surface extérieure au moins sur l'essentiel de sa longueur. Autrement dit, le bras 8 comprend une deuxième face 13, appelée face interne 13, logée à l'intérieur du corps 3 lorsque le bras 8 se trouve en position escamotée. Cette face interne 13 suit la courbure de la surface extérieure 10 au moins sur l'essentiel de sa longueur. Cela permet de minimiser l'impact sur la logeabilité du corps de l'engin sous-marin.

Sur la réalisation des figures, l'axe de rotation xo est parallèle à l'axe principal x de l'engin sous-marin. Cette solution est particulièrement avantageuse car elle permet de limiter au maximum l'encombrement au sein du corps 3 selon l'axe x. Autrement dit, la longueur du tronçon du corps 3 dédiée au dispositif d'émission/réception escamotable est minimale et sensiblement égal à la largeur du bras 8 ce qui permet de limiter au maximum la diminution de la charge utile de l'engin sous-marin, pour un corps de longueur donnée, ou bien de minimiser l'impact sur l'élancement de l'engin sous-marin.

Les moyens d'émission/réception 7 sont logés dans la portion du bras située entre l'articulation 9 et la deuxième extrémité 12. L'extrémité 12 est relevée lorsque le bras 8 passe de la position escamotée à la position déployée. Le bras 8 comprend, dans sa position déployée, le pôle, c'est-à-dire le point culminant de l'objet 3, au moins dans le voisinage du bras 8.

L'objet 1 est à flottabilité positive ou nulle. L'objet 1 est avantageusement équilibré de façon à ce qu'un plan de flottaison F solidaire du corps 3 se stabilise parallèlement à la surface de l'eau 2 lorsque l'objet flotte par état de mer calme. Le plan de flottaison sépare une partie du corps 3 se trouvant au dessus de la surface de l'eau et une portion du corps 3 se trouvant en-dessous de la surface de l'eau. Le plan de flottaison F est perpendiculaire au plan des figures 3a, 3b. Autrement dit, par état de mer calme, la surface de l'eau 2 est toujours parallèle au plan de flottaison F lié à l'objet. On peut ainsi dire que le plan de flottaison F définit un plan horizontal lorsque l'objet 1 flotte sur l'eau. Comme visible sur les figures 3a et 3b, l'axe de rotation xo est parallèle au plan de flottaison. Cela permet, pour une surface courbe prédéterminée, pour une longueur du bras prédéterminée et une position de l'articulation 9 prédéterminée, de pouvoir amener les émetteurs/récepteurs à une hauteur maximale par rapport à la surface de l'eau (amplitude de déploiement maximale) avec un encombrement minimal selon l'axe de rotation xo. Sur la réalisation des figures l'axe de rotation xo étant parallèle à l'axe principal de l'engin sous-marin x, l'encombrement selon la longueur de l'engin est réduit au maximum.

L'axe de rotation xo n'est pas forcément parallèle au plan de flottaison F. Le bras 8 est, par exemple, hélicoïdal et s'étend dans un plan perpendiculaire à un axe de rotation incliné par rapport au plan de flottaison.

Avantageusement, comme visible sur les figures 3a et 3b, la position déployée visible sur la figure 3b, est définie de façon que lorsque le bras 8 occupe la position déployée, un premier pôle 30 occupe une première position P1 définie dans un repère lié au plan de flottaison. Le premier pôle 30 est la zone du bras 8 située à l'altitude la plus élevée lorsque le bras est dans la position déployée. La première position P1 est la position la plus élevée occupée par le bras 8 lorsque le bras occupe la position déployée. La position déployée est définie de façon qu'un axe z appelé axe vertical, passant par la première position P1 occupée par un premier pôle 30 et l'articulation 9 est perpendiculaire au plan de flottaison F. Le premier pôle 30 est situé au voisinage de la deuxième extrémité 12 du bras 8. Autrement dit, l'essentiel de la longueur du bras entre l'articulation 9 et l'extrémité 12 se situe entre l'articulation 9 et le premier pôle 30. Par axe vertical z, on entend un axe perpendiculaire au plan de flottaison F. Cet agencement permet de dégager au maximum les émetteurs/récepteurs 7 pour une surface 4 prédéterminée, pour une position prédéterminée de l'articulation 9 sur la surface 4 et pour une longueur donnée du bras 8.

Sur la réalisation des figures, l'articulation 9 est agencée sensiblement à une deuxième position P2, dans un repère lié au plan de flottaison. La position P2 est la position occupée par un deuxième pôle 31 du corps 3 lorsque le bras 8 est en position escamotée. Le deuxième pôle 31 est la zone du bras 8 située à l'altitude la plus élevée lorsque le bras est dans la position escamotée. La deuxième position P2 est la position la plus élevée occupée par le bras 8 lorsque le bras occupe la position escamotée. Autrement dit, l'articulation se situe dans le voisinage du deuxième pôle 31. L'articulation 9 est par ailleurs agencée de façon que l'axe vertical z passe par la deuxième position P2 occupée par un deuxième pôle 31 lorsque le bras se trouve dans sa position escamotée. Cet agencement permet de dégager le bras 8 au maximum et de limiter au maximum l'entrée du bras dans le calibre du corps 3 lors de la rotation du bras entre la position escamotée et la position déployée. Cela permet de limiter la longueur du bras pour une altitude de déploiement souhaitée. Les positions P1, P2 et P3 (qui sera définie ultérieurement) sont définies au moins par leur altitude par rapport au plan de flottaison F.

La section 15 de l'objet représentée sur la figure 3a est une section de l'objet comprenant le bras 8, lorsque le bras 8 est en position escamotée. Cette section est réalisé selon le plan P matérialisé sur la figure 1 et étant perpendiculaire à l'axe de rotation xo. Le bras 8 affleurant la surface du corps 4, la section 15 est sensiblement identique à la section du corps localement autour dudit bras 8. Avantageusement, la portion de la circonférence, c'est-à-dire du périmètre, de la courbe 17 délimitant la section 15, sur laquelle s'étend le bras 8 entre l'articulation 9, c'est à dire entre la zone de la surface extérieure 10 située au-dessus de l'articulation selon l'axe z, et le premier pôle 30 est définie pour une position donnée de l'articulation 9, par rapport au corps 3, et pour un angle prédéterminé formé entre le plan de flottaison F et l'axe xo, de façon à être la portion de la circonférence minimale telle que lorsque le bras 8 se trouve dans la position déployée, la distance séparant le premier pôle 30 et l'articulation 9 selon l'axe vertical z est la distance maximale que l'on peut obtenir pour la section 15. L'angle de rotation du bras entre la position escamotée et la position déployée est alors défini en fonction de la longueur du bras.

Sur la réalisation des figures, la section 15 est ronde et la courbe 17 est un cercle. L'articulation 9 est située sensiblement à la deuxième position P2 occupée par le deuxième pôle 31 lorsque le bras 8 est escamoté. Autrement dit, l'articulation 9 est située sensiblement à l'altitude du deuxième pôle 31. L'axe de rotation xo est parallèle au plan de flottaison. Dés lors, la portion de la circonférence du cercle 17 séparant l'articulation 9 et le premier pôle 30 est sensiblement égale à la moitié de la circonférence du cercle. Le bras 8 pivote alors d'un angle sensiblement égal à 180° entre la position déployée et la position escamotée. Autrement dit, la troisième position P3, dans un repère lié au plan de flottaison. P3 est la position occupée par le premier pôle 30 lorsque le bras est escamoté est la position la plus basse occupée par le bras 8 lorsque le bras est dans la position escamotée. Lorsque le bras est déployé, le premier pôle 30 occupe la première position P1 qui est la position la plus élevée occupée par le bras lorsqu'il est déployé. Ceci permet de tirer pleinement profit du diamètre de l'engin, pour dégager les antennes de la surface de l'eau. En effet, l'altitude du premier pôle 30 au dessus de l'articulation 9, une fois le bras déployé, c'est-à-dire l'altitude de la première position P1 est quasiment égale au diamètre de l'engin. La capacité intrinsèque de ce système à éloigner au maximum les antennes de la surface de l'eau, ne fait qu'augmenter la robustesse de fonctionnement du système vis à vis de l'état de mer. A hauteur d'antenne déployée égale, cette solution est beaucoup plus compacte qu'une solution basée sur un mât rotatif autour d'un axe horizontal perpendiculaire à l'axe principal de l'engin sous-marin. En effet, l'augmentation de la hauteur de déploiement du bras n'affecte pas la longueur du tronçon occupé par le dispositif d'émission/réception mais uniquement la portion de la circonférence occupée par le bras 8. Dans ce mode de réalisation, la longueur du bras est supérieure à la moitié de la circonférence de la courbe 17 délimitant la section 15. Le bras pivote d'un angle sensiblement égal à 180° autour de l'axe de rotation entre la position escamotée et la position déployée.

Sur la figure 4, on a représenté le cas d'une section 105 délimitée par une courbe 107 elliptique définie par un grand axe 108 et un petit-axe 109. La longueur du demi grand axe 108 est supérieure à la longueur du petit axe 109, alors la longueur optimale pour une articulation située au deuxième pôle de l'ellipse sur le petit axe lorsque le plan de flottaison est parallèle au grand axe, est égale au quart de la circonférence de l'ellipse et l'angle de rotation est de 90°. Si le demi-grand axe présentât une longueur inférieure au petit axe, alors la longueur optimale serait la moitié de la circonférence et l'angle de rotation de 180°.

Comme visible sur la figure 2b, le bras 8 comprend un mât 40 et une tête 41. La tête comprend le premier pôle 30 visible sur les figures 3a et 3b. Le mât 40 est lié d'une part à l'articulation 9 et d'autre part à la tête 41. La tête 41 est agencée en extrémité du bras. Les émetteurs/récepteurs 7 sont montés sur la tête 41. Cela permet de dégager les émetteurs/récepteurs 7 à une altitude maximale au-dessus de la surface de l'eau 2 car lorsque le bras 8 est déployé, la tête 41 surplombe le mât 40, les émetteurs/récepteurs sont donc les éléments culminant de l'objet lorsque le bras 8 est déployé. Sur la réalisation des figures, la tête 41 délimite un logement 42 fermé dans lequel sont logés les émetteurs/récepteurs 7.

L'invention permet d'installer une pluralité d'antennes réparties autour du premier pôle 30 dans un plan parallèle au plan de flottaison F lorsque le bras 8 est déployé, sans affecter la logeabilité dans la partie centrale du corps 3 puisque ces antennes se trouvent réparties le long de la surface 4 lorsque le bras est escamoté. Les différentes antennes peuvent ainsi profiter de la même hauteur de déploiement ce qui maximise leur portée et évite un effet de masquage mutuel entre les antennes.

Avantageusement, la tête 41 comprend un support 43 sur lequel sont montés les moyens d'émission/réception 7. Le support 43 est sensiblement plan et s'étend parallèlement au plan de flottaison F lorsque le bras 8 se trouve dans la position déployée. Cet agencement permet d'éviter le masquage mutuel des différents émetteurs et récepteurs disposés sur cette surface. Sur la réalisation des figures, le bras 8 s'étend sensiblement sur la moitié du périmètre de la courbe 17, le support 43 plan est parallèle au plan de flottaison F, lorsque l'eau est calme, lorsque le bras 8 est déployé et escamoté.

Il est également possible de répartir les moyens d'émission/réception 7 le long du bras 8 entre l'articulation 9 et la deuxième extrémité 12 de façon qu'ils se trouvent à des altitudes différentes lorsque le bras est déployé ce qui permet de maximiser la surface utile d'emport de sources lumineuses, et/ou de moyens d'émission/réception. Comme la surface extérieure 10 du bras 8 est courbe, l'effet de masquage mutuel entre les différents émetteurs récepteurs est minimisé par rapport à celui obtenu dans le cas d'une installation sur un mât vertical. Cette minimisation de l'effet de masquage n'affecte pas la logeabilité du corps 3 dans sa partie intérieure centrale du corps 3. Sur l'exemple des figures, si on répartit les moyens d'émission/réception le long de la moitié supérieure du bras 8, c'est-à-dire le long d'un quart de cercle, face à la surface extérieure 10, ces moyens d'émission/réception sont décalés dans le plan horizontal, l'effet de masquage est donc minimisé. En variante, le bras comprend un mât s'étendant depuis la première extrémité 11 jusqu'à la deuxième extrémité 12.

Sur la réalisation des figures, la tête 41 présente une largeur plus importante que le mât 40 selon un axe perpendiculaire au plan dans lequel s'étend le bras 8 dans le sens de sa longueur. On limite ainsi l'espace occupé par le dispositif d'émission/ réception le long du tronçon et on augmente la place disponible dans la tête 41 pour y installer des émetteurs/récepteurs qui se retrouveront à la même hauteur une fois le bras déployé, sans affecter la logeabilité dans la partie intérieure centrale du corps 3 et en minimisant l'impact sur la flottabilité du corps 3.

Sur la réalisation des figures, la surface extérieure 10 du bras 8 est convexe et le premier pôle 30 est compris dans la surface extérieure 10. Sur ces figures, le premier pôle 30 est par ailleurs au sommet d'une surface convexe qui redescend en direction de la deuxième extrémité 12 d'une part et en direction de la première extrémité 11 d'autre part lorsque le bras 8 est en position déployée. Cela permet à la fois sa bonne intégration dans l'épure cylindrique du corps de l'engin en position escamotée mais aussi et surtout ce qui favorise l'écoulement de l'eau de mer, et ce afin d'éviter toute formation d'une pellicule d'eau de mer sur la surface de la fenêtre. En effet, la conséquence de formation d'une pellicule d'eau salée, même de très faible épaisseur, est le masquage des ondes électromagnétiques, telles que les ondes visuelles et les ondes radioélectriques, annihilant, de fait, la fonction principale du système de relocalisation : il s'agit donc d'un risque majeur. De manière générale, pour obtenir cet effet, la surface extérieure 10 est une surface convexe au moins dans une zone englobant le premier pôle 30. Par ailleurs, cette forme convexe confère à la fenêtre 45 -zone courbe englobant le sommet 30 et coiffant le logement 42- une robustesse mécanique lui conférant ainsi une meilleure résistance à la pression d'immersion avec un minimum d'épaisseur de matière. Cette épaisseur faible de la fenêtre 45 minimise l'atténuation des ondes reçues et ou transmises. Par ailleurs, la faible épaisseur de la fenêtre 45 contribue à un allègement de la tête de mât 41, ce qui offre les avantages suivants : équilibre plus stable en roulis, de l'AUV ou de l'UUV en surface, besoin d'un actionneur rotatif moins puissant pour la mise en rotation de la masse : gain de masse et de volume - encombrement à bord- sur le choix de l'actionneur. L'épaisseur de la fenêtre est avantageusement comprise entre 2 mm et 13 mm.

Les moyens d'émission/réception 7 sont logés dans la tête de mât 41. Le logement 42 est avantageusement fermé de façon étanche à l'eau. Celle-ci protège les antennes des contraintes mécaniques dues à l'immersion de l'engin sous-marin autonome au cours de sa mission. Elle a par exemple une tenue pression hydrostatique de 35 bars, (soit 350 mètres d'immersion).

Pour optimiser les masses, l'objet marin est localement à flottabilité neutre dans une zone englobant le bras 8. Dans la réalisation des figures, cela signifie qu'un tronçon d'émission/réception comprenant un tronçon de l'engin sous-marin muni du dispositif d'émission/réception et le dispositif d'émission/réception lui-même est à flottabilité neutre. Le mât 40 est avantageusement à section creuse de façon à délimiter un deuxième logement recevant la câblerie de liaison antennes vers balise, feux à éclat et ou récepteur de signaux visuels vers des cartes d'alimentation et de pilotage retenues.

La portion 46 de la surface extérieure 10 faisant face aux moyens d'émission/réception 7 est la surface externe de la fenêtre 45. Ladite fenêtre est avantageusement transparente aux ondes envoyées et/ou détectées par lesdits moyens d'émission/réception. Par exemple, la portion 46 de la fenêtre comprise dans la tête 41 est transparente à la fois aux fréquences des bandes UHF-VHF-GPS-Iridium soit dans la bande 30MHz - 2GHz ainsi qu'au spectre visible.

L'actionneur rotatif 80 peut être passif, par exemple du type ressort de torsion ou commandable. Dans ce dernier cas, ceci permet, une fois l'engin localisé, de commander à distance le repli du bras déployable. En effet, lorsque replié, le bras s'intègre parfaitement dans le profil hydrodynamique de l'engin, ce qui permet d'en réaliser la manutention tout en garantissant l'intégrité du dispositif d'émission et/ou de réception d'ondes électromagnétiques déployable. Cette commande à distance peut être réalisée depuis un bâtiment de surface, au moyen d'une liaison de communication téléphonique satellitaire ou au moyen d'une liaison de communication sous-marine. La communication téléphonique satellitaire utilise avantageusement une antenne de réception intégrée dans le bras 8, alors que la communication sous-marine nécessite la présence d'un hydrophone à bord de l'engin et d'un transducteur à bord du bâtiment de surface.

Pour pallier tout risque d'avarie des systèmes de communication, un dispositif de repli de secours est prévu. Il est réalisé à partir d'un relai magnétique embarqué à bord du corps 3, qui permet sous l'action d'un aimant de commander le repli du mât. Le choix de la technologie magnétique permet de s'affranchir de passages de coque étanches, tout en restant compatible des différents matériaux utilisés habituellement pour la réalisation des coques des engins autonomes sous-marins (composite -fibre de carbone, fibre de verre, etc...-, aluminium, titane). Opérationnellement, c'est un plongeur qui est amené à appliquer sur la coque un aimant, en un point précis (au niveau du relai magnétique embarqué) de l'engin.

La forme du logement 6 et du bras 8 sont définies de façon à la fois que le logement 6 puisse accueillir le bras 8 en position escamotée mais également à permettre son libre déploiement jusqu'à sa position déployée. La forme du fond 60 du logement 6 est complémentaire de la surface interne 13 du bras.

Le mât 40 est avantageusement réalisé en aluminium. Le mât est avantageusement protégé par un traitement de conversion (traitement électrolytique) et éventuellement peint. La tête de mât 41, notamment la portion 45 de la surface 10 comprise dans la tête 41, est avantageusement réalisée en matériau thermoplastique de type PMMA (Polymétacrylate de méthyle) pour le bon compromis offert entre ses qualités optiques sa densité et sa tenue mécanique.

Le corps 3 peut être le corps d'un engin sous-marin submersible autonome ou non. Ce corps 3 est aussi apte à flotter. En variante, le corps 3 est le corps d'un objet flottant tel qu'une bouée, par exemple une bouée acoustique dérivant à la surface de l'eau. Les bouées peuvent présenter des formes diverses, comme par exemple une forme torique, cylindrique, sphérique.

Le corps 3 présente localement autour du bras une forme de cylindre, l'axe de rotation étant parallèle à l'axe longitudinal du cylindre. Le cylindre peut être un cylindre de révolution. Le corps peut être un corps cylindrique, par exemple, une portion de cylindre destinée à être intégrée sur un engin sous-marin.

## Revendications

1. Objet marin (1) apte à flotter à la surface de l'eau (2), comprenant un corps (3) délimité au moins partiellement par une surface courbe (4) comprenant un logement (6) débouchant sur ladite surface courbe (4), ledit objet marin (1) comprenant un dispositif d'émission/réception déployable rigide et comprenant un bras (8) sur lequel sont montés des moyens d'émission et/ou de réception d'ondes électromagnétiques (7), ledit bras (8) étant relié audit corps (3) au moyen d'une articulation (9) à un degré de liberté en rotation autour d'un axe de rotation (xo), l'articulation permettant au bras (8) de pivoter de manière réversible entre une position escamotée, dans laquelle le bras (8) est logé dans le logement et affleure la surface courbe (4) et une position déployée dans laquelle le bras (8) s'étend à l'extérieur dudit logement (6), ledit objet marin étant caractérisé en que ledit bras comprend une première surface (10) appelée surface extérieure, la surface extérieure (10) étant courbée selon la longueur du bras (8), ladite surface extérieure (10) affleurant ladite surface courbe (4) et suivant la courbe de ladite surface courbe (4) lorsque le bras (8) se trouve dans sa position escamotée, le dispositif d'émission/réception ne se déformant pas entre sa position escamotée et sa position déployée, le corps présentant localement autour du bras (8), une forme de cylindre, l'axe de rotation (xo) étant parallèle à l'axe longitudinal du cylindre.

2. Objet marin (1) selon la revendication précédente, dans lequel le bras (8) est courbé, la courbure du bras (8) suivant la courbure de ladite surface extérieure (10).

3. Objet marin (1) selon l'une quelconque des revendications précédentes, dans lequel ledit bras (8) s'étend perpendiculairement audit axe de rotation (xo).

4. Objet marin (1) selon l'une quelconque des revendications précédentes, dans lequel ledit objet marin (1) est équilibré de façon qu'un plan de flottaison (F) lié au corps (3) se stabilise parallèlement à la surface de l'eau (2) lorsque ledit objet marin (1) flotte par état de mer calme, l'axe de rotation (xo) étant parallèle au plan de flottaison, le bras (8) s'étendant depuis une première extrémité (11) jusqu'à une deuxième extrémité (12) plus éloignée de l'articulation (9) que la première extrémité (11), ledit bras (8) comprenant un premier pôle (30) correspondant à la zone du bras (8) se trouvant à l'altitude maximale au-dessus du plan de flottaison (F) lorsque le bras (8) se trouve dans la position déployée, le premier pôle (30) étant situé au voisinage de la deuxième extrémité (12).

5. Objet marin selon la revendication précédente, dans lequel la position déployée est définie de façon que lorsque le bras (8) occupe la position déployée, un axe, appelé axe vertical (z), passant par le premier pôle (30) et l'articulation (9), est perpendiculaire au plan de flottaison (F) par état de mer calme.

6. Objet marin selon la revendication 5, dans lequel le bras comprend un deuxième pôle (31) correspondant à la zone du bras (8) située à l'altitude maximale lorsque le bras (8) est dans la position escamotée, le deuxième pôle (31) se trouvant sur l'axe vertical (z).

7. Objet marin selon l'une quelconque des revendications 4 à 6, dans lequel l'objet marin (1) comprend une section (15) comprenant le bras (8), la section (15) étant réalisée dans un plan perpendiculaire à l'axe de rotation (xo) lorsque le bras (8) est en position escamotée, la section (15) étant délimitée par une courbe fermée (17), ladite courbe fermée ayant un périmètre, la portion du périmètre sur laquelle s'étend le bras (8) entre l'articulation (9) et le premier pôle (30) est définie, pour une position donnée de l'articulation (9) par rapport au corps (3) et pour un angle prédéterminé formé entre l'axe de rotation (xo) et le plan de flottaison (F), comme étant la portion minimale du périmètre telle que lorsque le bras (8) se trouve dans la position déployée, la distance séparant le premier pôle (30) de l'articulation (9) selon l'axe vertical (z) est la distance maximale pouvant être obtenue pour ladite section (15).

8. Objet marin selon la revendication précédente et la revendication 6, dans lequel la courbe (17) est un cercle, et dans lequel ladite portion de la circonférence est égale à la moitié de la circonférence du cercle.

9. Objet marin selon la revendication précédente, dans lequel la longueur du bras (8) est supérieure à la moitié de la circonférence du cercle, le bras pivotant d'un angle sensiblement égal à 180° entre la position déployée et la position escamotée.

10. Objet marin selon l'une quelconque des revendications 4 à 9, dans lequel le premier pôle (30) est situé sur la surface extérieure (10), dans lequel la surface extérieure (10) est convexe au moins dans une zone englobant le premier pôle (30).

11. Objet marin selon l'une quelconque des revendications 4 à 10, dans lequel le bras comprend un mât (40) reliant une tête (41) à l'articulation (9), la tête (12) comprenant le premier pôle (30) et délimitant un logement dans lequel sont logés les moyens d'émission et/ou de réception (7).

12. Objet marin (1) selon la revendication précédente, dans lequel la tête (41) comprend un support (43) sur lequel sont montés les moyens d'émission et/ou de réception (7), le support (43) s'étendant sensiblement parallèlement au plan de flottaison (F), par état de mer calme, lorsque le bras (8) se trouve dans la position déployée.

13. Objet marin (1) selon l'une quelconque des revendications 11 à 12, dans lequel la tête (41) est plus large que le mât (40) selon un axe perpendiculaire au plan dans lequel s'étend le bras dans le sens de sa longueur.

14. Objet marin (1) selon l'une quelconque des revendications précédentes, dans lequel le cylindre est un cylindre de révolution.

15. Objet marin selon l'une quelconque des revendications précédentes, dans lequel le corps (3) est le corps d'un engin sous-marin.

16. Objet marin (1) selon l'une quelconque des revendications précédentes, ledit objet étant localement à flottabilité neutre, dans une zone comprenant le bras (8).

17. Objet marin selon l'une quelconque des revendications précédentes, dans lequel dans sa position escamotée, le bras (8) ferme sensiblement l'ouverture (104), l'ouverture étant une ouverture ménagée dans la surface courbe (4) de façon que le logement débouche sur la dite surface courbe sur toute sa longueur.

18. Objet marin selon l'une quelconque des revendications précédentes, dans lequel la surface extérieure est destinée à être dans la continuité de la courbe de la surface courbe lorsque le bras est dans la position escamotée.

19. Objet marin selon l'une quelconque des revendications précédentes, comprenant un actionneur rotatif (80), le bras (8) étant mis en rotation autour de l'axe de rotation (xo) au moyen d'un actionneur rotatif (80) logé dans la section courante du corps (3).

20. Objet marin selon la revendication précédente, dans lequel l'actionneur est commandable.

## Patentansprüche

1. Zum Schwimmen an der Wasseroberfläche (2) fähiges Seeobjekt (1), beinhaltend einen Körper (3), welcher mindestens teilweise durch eine gekrümmte Oberfläche (4) begrenzt ist, beinhaltend ein Fach (6), welches in die gekrümmte Oberfläche (4) mündet, wobei das Seeobjekt (1) eine starre ausklappbare Vorrichtung zum Senden/Empfangen, beinhaltend einen Arm (8), beinhaltet, an welcher Mittel zum Senden und/oder zum Empfangen von elektromagnetischen Wellen (7) montiert sind, wobei der Arm (8) mit dem Körper (3) mithilfe eines Gelenks (9) mit einem Freiheitsgrad in Rotation um eine Drehachse (xo) verbunden ist, wobei das Gelenk es dem Arm (8) ermöglicht, reversibel zwischen einer eingeklappten Position, in welcher der Arm (8) in dem Fach verstaut ist und an der gekrümmten Oberfläche (4) anliegt und einer ausgeklappten Position, in welcher der Arm (8) sich von dem Fach (6) nach außen erstreckt, zu schwenken,
wobei das Seeobjekt **dadurch gekennzeichnet ist, dass** der Arm eine erste Oberfläche (10) beinhaltet, genannt äußere Oberfläche, wobei die äußere Oberfläche (10) entlang der Länge des Arms (8) gekrümmt ist, wobei die äußere Oberfläche (10) an der gekrümmten Oberfläche (4) anliegt und der gekrümmten Oberfläche (4) folgt, wenn der Arm (8) sich in seiner eingeklappten Position befindet, wobei die Vorrichtung zum Senden/Empfangen sich nicht zwischen ihrer eingeklappten Position und ihrer ausgeklappten Position verformt, wobei der Körper lokal um den Arm (8) eine Zylinderform aufweist, wobei die Drehachse (xo) parallel zur Längsachse des Zylinders ist.

2. Seeobjekt (1) nach dem vorhergehenden Anspruch, bei welchem der Arm (8) gekrümmt ist, wobei die Krümmung des Arms (8) der Krümmung der äußeren Oberfläche (10) folgt.

3. Seeobjekt (1) nach einem der vorhergehenden Ansprüche, bei welchem der Arm (8) sich in eine Richtung rechtwinklig zur Drehachse (xo) erstreckt.

4. Seeobjekt (1) nach einem der vorhergehenden Ansprüche, bei welchem das Seeobjekt (1) so ausgeglichen ist, dass eine mit dem Körper (3) verbundene Schwimmebene (F) sich parallel zur Wasseroberfläche (2) stabilisiert, wenn das Seeobjekt (1) bei ruhigem Meer schwimmt, wobei die Drehachse (xo) parallel zur Schwimmebene ist, wobei der Arm (8) sich von einem ersten Ende (11) bis zu einem zweiten Ende (12) erstreckt, welches weiter vom Gelenk (9) entfernt ist als das erste Ende (11), wobei der Arm (8) einen ersten Pol (30) beinhaltet, welcher demjenigen Bereich des Arms (8) entspricht, welcher sich in der höchsten Höhe oberhalb der Schwimmebene (F) befindet, wenn der Arm (8) sich in der ausgeklappten Position befindet, wobei der erste Pol (30) sich in der Nähe des zweiten Endes befindet (12).

5. Seeobjekt nach dem vorhergehenden Anspruch, bei welchem die ausgeklappte Position definiert ist, so dass, wenn der Arm (8) die ausgeklappte Position einnimmt, sich eine Achse, genannt vertikale Achse (z), welche den ersten Pol (30) und das Gelenk (9) durchquert, bei ruhigem Meer rechtwinklig zur Schwimmebene (F) befindet.

6. Seeobjekt nach Anspruch 5, bei welchem der Arm einen zweiten Pol (31) beinhaltet, welcher demjenigen Bereich des Arms (8) entspricht, welcher sich in der höchsten Höhe befindet, wenn der Arm (8) in der eingeklappten Position steht, wobei der zweite Pol (31) sich auf der vertikalen Achse (z) befindet.

7. Seeobjekt nach einem der Ansprüche 4 bis 6, bei welchem das Seeobjekt (1) einen Abschnitt (15) beinhaltet, welcher den Arm (8) beinhaltet, wobei der Abschnitt (15) in einer Ebene rechtwinklig zur Drehachse (xo) realisiert ist, wenn der Arm (8) in eingeklappter Stellung steht, wobei der Abschnitt (15) durch eine geschlossene Krümmung (17) begrenzt wird, wobei die geschlossene Krümmung einen Umfang besitzt, wobei der Abschnitt des Umfanges, an welchem sich der Arm (8) zwischen dem Gelenk (9) und dem ersten Pol (30) erstreckt, für eine gegebene Position des Gelenks (9) in Bezug auf den Körper (3) und für einen vorbestimmten Winkel, welcher zwischen der Drehachse (xo) und der Schwimmebene (F) gebildet wird, definiert ist als der Mindestabschnitt des Umfanges, so dass, wenn der Arm (8) sich in der ausgeklappten Position befindet, der Abstand, welcher den ersten Pol (30) vom Gelenk (9) entlang der vertikalen Achse (z) trennt, der Höchstabstand ist, welcher für den Abschnitt (15) erzielt werden kann.

8. Seeobjekt nach dem vorhergehenden Anspruch und dem Anspruch 6, bei welchem die Krümmung (17) ein Kreis ist, und bei welchem der Abschnitt des Umfanges gleich der Hälfte des Umfanges des Kreises ist.

9. Seeobjekt nach dem vorhergehenden Anspruch, bei welchem die Länge des Armes (8) größer als die Hälfte des Umfanges des Kreises ist, wobei der Arm um einen Winkel von im Wesentlichen gleich 180° zwischen der ausgeklappten Position und der eingeklappten Position schwenkt.

10. Seeobjekt nach einem der Ansprüche 4 bis 9, bei welchem der erste Pol (30) an der äußeren Oberfläche (10) befindlich ist, wobei die äußere Oberfläche (10) mindestens in einem Bereich konvex ist, welcher den ersten Pol (30) beinhaltet.

11. Seeobjekt nach einem der Ansprüche 4 bis 10, bei welchem der Arm einen Mast (40) beinhaltet, welcher einen Kopf (41) mit dem Gelenk (9) verbindet, wobei der Kopf (12) den ersten Pol (30) beinhaltet und ein Fach begrenzt, in welchem die Mittel zum Senden und/oder Empfangen (7) verstaut sind.

12. Seeobjekt (1) nach dem vorhergehenden Anspruch, bei welchem der Kopf (41) eine Stütze (43) beinhaltet, an welcher die Mittel zum Senden und/oder Empfangen (7) montiert sind, wobei die Stütze (43) sich bei ruhigem Meer im Wesentlichen parallel zur Schwimmebene (F) erstreckt, wenn der Arm (8) sich in der ausgeklappten Position befindet.

13. Seeobjekt (1) nach einem der Ansprüche 11 bis 12, bei welchem der Kopf (41) breiter als der Mast (40) entlang einer Achse ist, welche rechtwinklig zu derjenigen Ebene verläuft, in welcher sich der Arm in der Richtung seiner Länge erstreckt.

14. Seeobjekt (1) nach einem der vorhergehenden Ansprüche, bei welchem der Zylinder ein Umdrehungszylinder ist.

15. Seeobjekt nach einem der vorhergehenden Ansprüche, bei welchem der Körper (3) der Körper eines Unterseefahrzeugs ist.

16. Seeobjekt (1) nach einem der vorhergehenden Ansprüche, bei welchem das Objekt lokal in einem Bereich, welcher den Arm (8) beinhaltet, eine neutrale Schwimmfähigkeit besitzt.

17. Seeobjekt nach einem der vorhergehenden Ansprüche, bei welchem der Arm (8) in seiner eingeklappten Position im Wesentlichen die Öffnung (104) verschließt, wobei die Öffnung eine Öffnung ist, welche in der gekrümmten Oberfläche (4) geschaffen ist, damit das Fach über seine gesamte Länge in die gekrümmte Oberfläche mündet.

18. Seeobjekt nach einem der vorhergehenden Ansprüche, bei welchem die äußere Oberfläche dazu bestimmt ist, eine Kontinuität der Krümmung der gekrümmten Oberfläche zu bilden, wenn sich der Arm in der eingeklappten Position befindet.

19. Seeobjekt nach einem der vorhergehenden Ansprüche, beinhaltend ein Drehstellglied (80), wobei der Arm (8) in Rotation rund um die Drehachse (xo) mithilfe eines Drehstellgliedes (80) versetzt wird, welches in dem Standardabschnitt des Körpers (3) untergebracht ist.

20. Seeobjekt nach dem vorhergehenden Anspruch, bei welchem das Stellglied steuerbar ist.

## Claims

1. A marine object (1) able to float on the water surface (2), comprising a body (3) at least partially defined by a curved surface (4) comprising a housing (6) emerging on said curved surface (4), said marine object (1) comprising a rigid deployable emission/reception device and comprising an arm (8), on which means for emitting and/or receiving electromagnetic waves (7) are mounted, said arm (8) being connected to said body (3) by means of a hinge (9) with a degree of rotational freedom about an axis of rotation (xo), the hinge allowing the arm (8) to reversibly pivot between a stowed position, in which the arm (8) is housed in the housing and is flush with the curved surface (4), and a deployed position, in which the arm (8) extends outside said housing (6),
said marine object being **characterised in that** said arm comprises a first surface (10), called external surface, the external surface (10) being curved along the length of the arm (8), said external surface (10) being flush with said curved surface (4) and following the curve of said curved surface (4) when the arm (8) is in its stowed position, the emission/reception device not deforming between its stowed position and its deployed position, the body locally having, around the arm (8), the shape of a cylinder, the axis of rotation (xo) being parallel to the longitudinal axis of the cylinder.

2. The marine object (1) as claimed in the preceding claim, wherein the arm (8) is curved, with the curvature of the arm (8) following the curvature of said external surface (10).

3. The marine object (1) as claimed in any one of the preceding claims, wherein said arm (8) extends perpendicular to said axis of rotation (xo).

4. The marine object (1) as claimed in any one of the preceding claims, wherein said marine object (1) is balanced so that a water line plane (F) associated with the body (3) stabilises parallel to the water surface (2) when said marine object (1) floats in calm seas, the axis of rotation (xo) being parallel to the water line plane, the arm (8) extending from a first end (11) as far as a second end (12) further away from the hinge (9) than the first end (11), said arm (8) comprising a first pole (30) corresponding to the zone of the arm (8) located at the maximum altitude above the water line plane (F) when the arm (8) is in the deployed position, the first pole (30) being located in the vicinity of the second end (12).

5. The marine object as claimed in the preceding claim, wherein the deployed position is defined so that, when the arm (8) occupies the deployed position, an axis, called vertical axis (z), passing through the first pole (30) and the hinge (9), is perpendicular to the water line plane (F) in calm seas.

6. The marine object as claimed in claim 5, wherein the arm comprises a second pole (31) corresponding to the zone of the arm (8) located at the maximum altitude when the arm (8) is in the stowed position, the second pole (31) being located on the vertical axis (z).

7. The marine object as claimed in any one of claims 4 to 6, wherein the marine object (1) comprises a section (15) comprising the arm (8), the section (15) being produced in a plane perpendicular to the axis of rotation (xo) when the arm (8) is in the stowed position, the section (15) being defined by a closed curve (17), said closed curve having a perimeter, the portion of the perimeter on which the arm (8) extends between the hinge (9) and the first pole (30) is defined, for a given position of the hinge (9) relative to the body (3) and for a predetermined angle formed between the axis of rotation (xo) and the water line plane (F), as being the minimum portion of the parameter such that when the arm (8) is in the deployed position, the distance separating the first pole (30) from the hinge (9) along the vertical axis (z) is the maximum distance that can be obtained for said section (15).

8. The marine object as claimed in the preceding claim and in claim 6, wherein the curve (17) is a circle, and wherein said portion of the circumference is equal to half the circumference of the circle.

9. The marine object as claimed in the preceding claim, wherein the length of the arm (8) is greater than half the circumference of the circle, with the arm pivoting by an angle that is substantially equal to 180° between the deployed position and the stowed position.

10. The marine object as claimed in any one of claims 4 to 9, wherein the first pole (30) is located on the external surface (10), wherein the external surface (10) is convex at least in a zone encompassing the first pole (30).

11. The marine object as claimed in any one of claims 4 to 10, wherein the arm comprises a mast (40) connecting a head (41) to the hinge (9), the head (12) comprising the first pole (30) and defining a housing, in which the emitting and/or receiving means (7) are housed.

12. The marine object (1) as claimed in the preceding claim, wherein the head (41) comprises a support (43), on which the emitting and/or receiving means (7) are mounted, the support (43) substantially extending parallel to the water line plane (F), in calm seas, when the arm (8) is in the deployed position.

13. The marine object (1) as claimed in any one of claims 11 to 12, wherein the head (41) is wider than the mast (40) along an axis perpendicular to the plane in which the arm extends lengthwise.

14. The marine object (1) as claimed in any one of the preceding claims, wherein the cylinder is a rotational cylinder.

15. The marine object as claimed in any one of the preceding claims, wherein the body (3) is the body of an underwater craft.

16. The marine object (1) as claimed in any one of the preceding claims, said object locally having neutral buoyancy in a zone comprising the arm (8).

17. The marine object as claimed in any one of the preceding claims, wherein, in its stowed position, the arm (8) substantially closes the opening (104), the opening being an opening arranged in the curved surface (4) so that the housing emerges on said curved surface over its entire length.

18. The marine object as claimed in any one of the preceding claims, wherein the external surface is intended to follow the continuity of the curve of the curved surface when the arm is in the stowed position.

19. The marine object as claimed in any one of the preceding claims, comprising a rotary actuator (80), the arm (8) being rotated about the axis of rotation (xo) by means of a rotary actuator (80) housed in the standard section of the body (3).

20. The marine object as claimed in the preceding claim, wherein the actuator is controllable.
